# EUROPEAN PATENT SPECIFICATION

(11) **EP 0 869 091 B1**
(45) Date of publication and mention of the grant of the patent: **11.08.2004**
(21) Application number: 98105111.3
(22) Date of filing: 20.03.1998
(51) Int. Cl.: B65G 57/11

(54) **Device for stacking flat products, particularly ceramic tiles**
Vorrichtung zum Stapeln plattenförmiger Gegenstände, insbesondere Keramikfliesen
Dispositif pour empiler des objets plats, notamment des carreaux en céramique

(30) Priority: 01.04.1997 IT BO970193
(43) Date of publication of application: 07.10.1998
(73) Proprietor: GRUPPO BARBIERI & TAROZZI S.r.l., 41043 Formigine (Modena) (IT)
(72) Inventor: Riva, Werther, Prov. of Reggio Emilia (IT); Colacchio, Modesto Giovanni, 41100 Modena (IT)
(74) Representative: Burrows, Anthony Gregory

(56) References cited:
- EP-A- 0 439 438
- GB-A- 2 161 149
- IT-B- 1 158 227
- IT-B- 1 238 781
- US-A- 3 306 475
- US-A- 4 013 183

## Description

The present invention relates to a device for stacking flat products, particularly ceramic tiles.

Tile stacking devices, capable of forming a plurality of stacks which are separated according to a quality gradient sorted upstream by one or more operators, have long been known and used especially in the ceramics industry.

IT-1238781, on which the preamble of claim 1 is based, discloses stacking devices constituted by a narrow and tall main frame, in the upper portion of which there is provided a tile conveyance line of the type with narrow belts which retain said tiles by their sides and move them vertically at the various stacking stations.

Each one of the stacking stations has an upper pusher which extracts the tiles from the conveyance line so that they are deposited on an underlying supporting element, which moves downwards stepwise by an extent which corresponds to the thickness of each tile.

Once the stack has been completed with a programmable and preset number of tiles, the supporting element descends further in order to deposit the formed stack onto an underlying conveyor for sending it to a subsequent packaging station.

In a known embodiment, the supporting element is constituted, for each stacking station, by a pan mounted at the top of a vertical stem which fits inside the active portion of the lower conveyor, which in this case is of the parallel-belt type, moving the empty pan so that it is flush, in a downward region, with the tiles conveyed by the upper line and moving it downwards stepwise upon each deposition.

Once the stack has been completed, the pan descends until it is below the plane of arrangement of the belts and releases the stack onto the belts; when the stack moves away, the pan rises again and repositions itself so as to wait for a new operating cycle.

Another known embodiment of the supporting element is composed of a pair of brackets which are arranged so as to face each other and are co-planar; these brackets are installed so that they can slide vertically on adapted sliding blocks which are synchronously motor-driven and are guided along corresponding pairs of vertical parallel posts rigidly coupled to the main frame.

The operation of the brackets is fully similar to the operation of the pan, except that the conveyor on which the stacks are deposited can also be of the belt type, since the brackets retract, during the release of the stack, to the sides of the conveyor.

In this case too, in order to return to the operating standby configuration in which they are raised at the cycle start level, the stack must move away from the deposition region in order to avoid interference with said stack during ascent.

Conventional stacking devices have substantially two kinds of problem.

The first problem consists in that the elements for supporting the stacks of tiles must wait, before rearranging themselves in the raised configuration to wait for the beginning of a new stacking cycle, until the formed stack and the stacks deposited upstream by other elements have moved away on the lower conveyor for transfer to packaging, in order to avoid interference which would jam the stacking device and damage the tiles.

The second problem consists in that in the bracket-like embodiment of the supporting elements the posts along which the brackets move are monolithically rigid with the main frame.

The first problem thus causes a significant waste of time, owing to the necessary slowing of the stacking cycle to wait until the receiving conditions of each stacking station are restored.

The second problem causes a much more severe and significant increase in production costs when it is necessary to perform ordinary periodic maintenance of the stacking device, particularly of the sliding blocks that slide on the posts and support the brackets and of the posts proper.

In fact, such maintenance requires fully stopping the stacking device for the entire duration of the intervention, which sometimes lasts several hours.

Since the stacking devices produce an hourly turnover of a few million lire, even their simple halting immediately causes considerable financial damage.

Moreover, during the assembly of the stacking device, each one of the posts must be assembled directly on the frame thereof, causing great problems in terms of accessibility for the assigned personnel.

The aim of the present invention is to solve the above problems of the prior art by providing a stacking device for flat products, particularly ceramic tiles, which allows to significantly accelerate the step for restoring the stacking stations.

Within this aim, an object of the present invention is to realize a stacking device for flat products, particularly ceramic tiles, which allows to reduce each ordinary and extraordinary maintenance stop to the minimum indispensable time.

A further object of the present invention is to realize a stacking device for flat products, particularly ceramic tiles, which allows even partial bench assembly.

This aim, these objects and others which will become apparent hereinafter are achieved by a stacking device for flat products, particularly ceramic tiles, which comprises a main frame which supports, in the upper portion, a conveyor with parallel narrow belts for gripping the sides of the products and along which there is provided a plurality of underlying stations for stacking the products in order to form stacks after said products have been rested bilaterally on corresponding means which can slide on corresponding pairs of guiding posts and for depositing them on a further underlying conveyor for sending the products to a packaging station, characterized in that said posts are modular and can be detachably coupled to said main frame through corresponding means.

Further characteristics and advantages will become apparent from the description of a preferred embodiment of a stacking device for flat products, particularly ceramic tiles, illustrated only by way of non-limitative example in the accompanying drawings, wherein:
Figure 1 is a schematic reduced-scale side view of a stacking device for flat products, particularly for ceramic tiles, according to the invention;

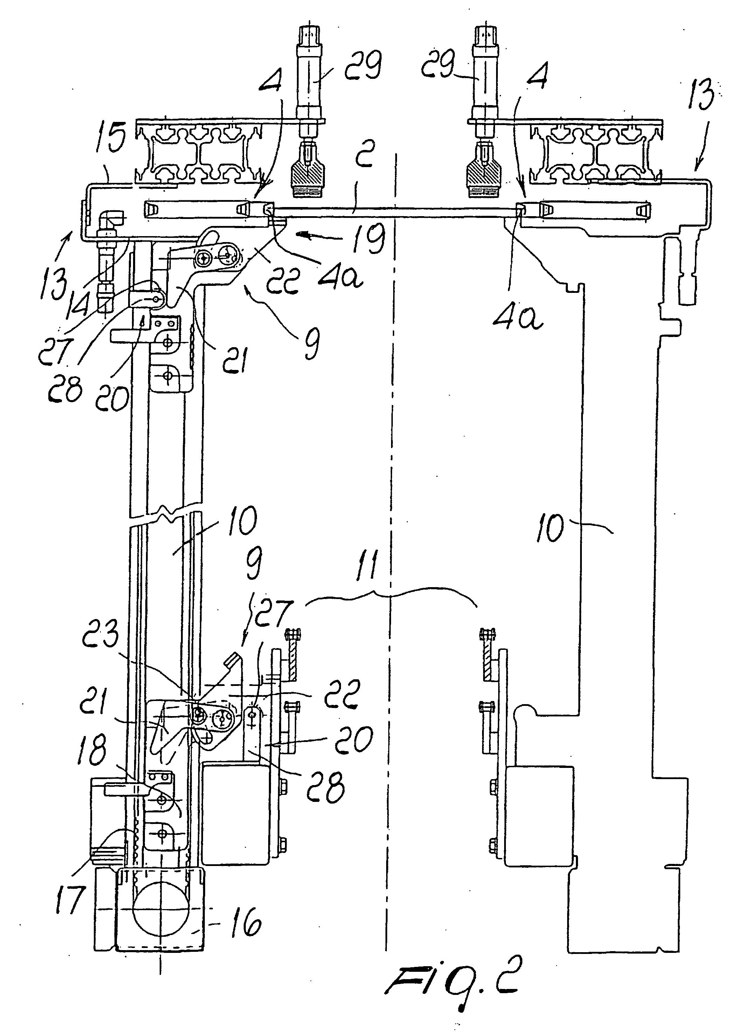

Figure 2 is an enlarged-scale transverse sectional thereof, taken along the plane II-II of figure 1;

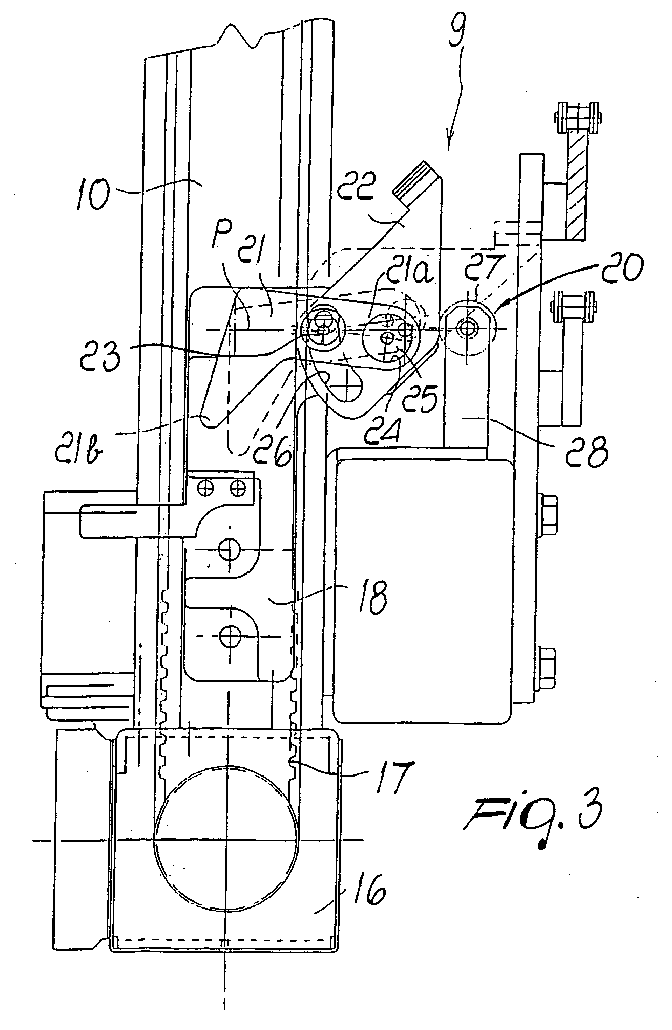

Figure 3 is a detail view of the sliding means for the bilateral support of the products.

With reference to the above figures, the reference numeral 1 generally designates a stacking device for flat products, particularly ceramic tiles 2, which comprises essentially a main frame 3 which supports, in its upper portion, a conveyor 4 with parallel narrow belts 4a for engaging the sides of the tiles 2.

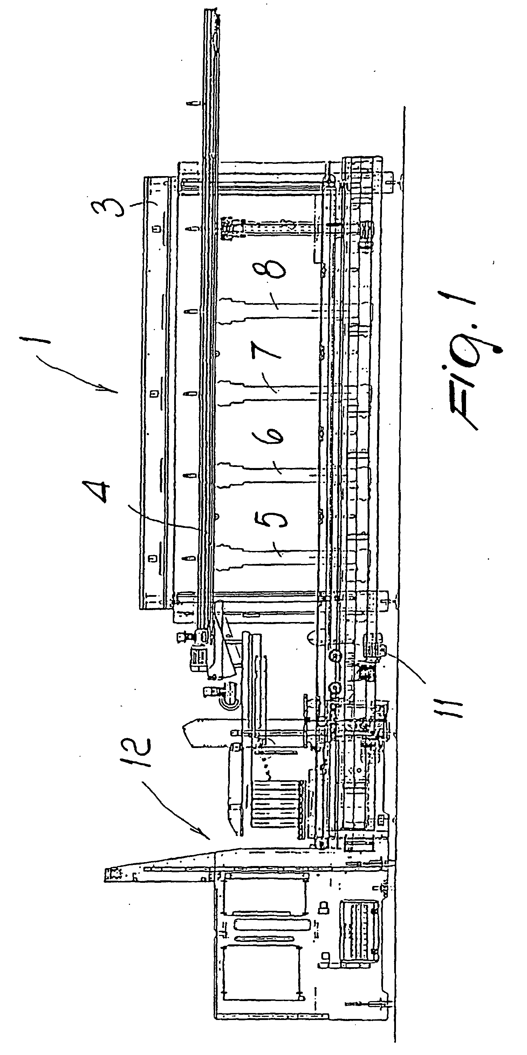

Along the extension of the conveyor 4 there is provided a plurality of underlying stations for stacking the tiles 2, designated by the reference numerals 5, 6, 7 and 8 in figure 1, in which the stacks are formed after bilaterally resting the tiles 2 on corresponding means 9 slideable on corresponding pairs of guiding posts 10.

The formed stacks are deposited on an additional underlying conveyor 11 in order to send them to a packaging station 12. Each one of the posts 10 is modular and can be rigidly and detachably coupled by using corresponding means 13 to said main frame 3. The means 13 are constituted by respective contoured flanges 14 which are pre-perforated for the engagement of conventional screw means and are provided at the upper and lower ends of the posts 10.

The flanges 14 can be coupled with a close fit to corresponding complementary flanges 15 shaped complementarily and rigidly supported by the main frame 3.

Each one of the modular posts 10 can be assembled individually and is provided with independent means, such as a motor 16 coupled to a toothed belt 17, for the reciprocating motion of the sliding means 9; each post is furthermore provided with its own elements for connection to an electric power supply line, which are in any case of a conventional type and therefore not illustrated and described for the sake of simplicity.

The sliding means 9 for bilateral support are constituted, for each station, by at least one pair of sliding blocks 18 which can be actuated vertically with a reciprocating stepwise motion and are guided on the modular posts 10.

Corresponding articulated brackets 19 are articulated to the sliding blocks 18 and can be actuated automatically, by means of corresponding elements 20, alternately into a folded noninterference configuration, during their rise when empty, or into an active stacking configuration in which they cantilever out horizontally and face the corresponding opposite bracket.

Each one of the articulated brackets 19 is constituted by the mutually articulated coupling of two cooperating parts: namely, of a deactivation and resetting rocker 21 and of a supporting tooth 22.

The rocker 21 is articulated so that it can rotate on a vertical plane about a fixed horizontal axis, designated by the reference numeral 23, which is rigidly coupled to the respective sliding block 18 and forms an end 21a which cantilevers out towards the tooth 22. Said end is provided with an eyelet 24 which accommodates a likewise horizontal pivot 25 made of flexible material for mutual articulation with the tooth 22.

The tooth 22 is in turn provided with a slot 26, which is shaped like a circular arc and is formed in the portion that faces the respective post 10; the fixed axis 23 is engaged in the slot.

The automatic actuation elements are constituted by two rollers 27 which are mounted, so that they can rotate freely, on a support 28 of their own which is rigidly coupled to each post 10, proximate to the upper and lower stroke limits of the sliding blocks 18 respectively.

The operation of the invention is as follows.

The conventional pushers 29 located at each one of the stacking stations 5, 6, 7, 8 release the tiles 2 from the grip of the narrow belts 4a and drop them onto the underlying brackets 19, which are set to receive them.

Each time a tile 2 is deposited, the pairs of brackets 19 move downwards by corresponding steps, actuated by the motors 16/toothed belts 17 system.

Once the stack has been completed, the brackets 19 are moved down further until the stack is deposited spontaneously on the conveyor 11, continuing the stroke until the teeth 22 abut against the lower rollers 27.

Contact between them causes an upward rotation of the tooth 22, which in turn, when the fixed axis 23 reaches the end of the slot 26, pushes down the rocker 21 as well. The elasticity of the pivots 25 allows to move beyond the dead center defined by the horizontal plane P passing through the centers of the fixed axes 23 and the teeth 22 remain turned upwards in a configuration in which they do not interfere with the freshly formed stack of tiles 2. This allows the pair of brackets 19 to quickly rise without having to wait for said stack to move away on the conveyor 11.

When the sliding blocks reach the upper stroke limit, the rockers 21 encounter the upper rollers 27 with their ends 21b.

Contact therewith causes a new rotation of the rockers 21, which return upwards; the fixed axis 23 reaches the opposite end of the slot 26 and acts as a fulcrum for the rotation of the end 21a, which again, through the elasticity of the pivot 25, moves beyond said horizontal dead center, horizontally resetting the teeth 22 with a spring-latch action, thus arranging them so that they are ready for a new stacking cycle.

Each one of the posts 10 on which the sliding blocks 18 run and are guided can be individually detached from the main frame 3. It is in fact sufficient to loosen the screw means that secure one another the flanges 14 and the complementary flanges 15, disconnect the elements for connection to the main electric line and, if necessary, replace the post 10 with an identical one, for example in case of malfunction or maintenance, thus limiting the stopping of the stacking device 1 to the minimum indispensable period.

The removed post 10 can be subjected to maintenance in a workshop on a bench, allowing to work simply and conveniently.

In this manner it is also possible to provide a small reserve of posts ready for replacements and also to assemble the stacking device 1 more easily and quickly during its installation.

It has thus been found that the described invention achieves the intended aim and objects.

The invention thus conceived is susceptible of modifications and variations, all of which are within the scope of the inventive concept.

Moreover, all the details may be replaced with other technically equivalent elements.

In the practical embodiment of the invention, the materials used, as well as the shapes and the dimensions, may be any according to requirements without thereby abandoning the scope of the protection of the appended claims.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A stacking device (1) for flat products, particularly ceramic tiles (2), comprising a main frame (3) which supports, in the upper portion, a conveyor (4) with parallel narrow belts for gripping the sides of the products and along which there is provided a plurality of underlying stations (5-8) for stacking the products in order to form stacks after said products have been rested bilaterally on corresponding means (9) which slide on corresponding pairs of guiding posts (10) and for depositing them on a further underlying conveyor (11) for sending the products to a packaging station (12), **characterized in that** said posts (10) are modular and can be detachably coupled to said main frame (3) through corresponding means (13), and **in that** said sliding bilateral support means (9) are constituted, for each station, by at least one pair of sliding blocks (18) which can be actuated vertically with a reciprocating stepwise motion and are guided on said modular posts (10), corresponding articulated brackets (19) being articulated to said sliding blockst (18), said brackets (19) being actuatable automatically, by means of corresponding elements (20), alternately into a folded noninterference configuration, during ascent when empty, or into a facing active configuration which cantilevers out horizontally for stacking.

2. A stacking device (1) according to claim 1, **characterized in that** said means (13) coupling the posts (10) to said main frame (3) are constituted by respective contoured flanges (14) which are pre-perforated for the engagement of conventional screw means, are provided at the upper and lower ends of the posts (10) and can be coupled to corresponding complementarily shaped complementary flanges (15) rigidly coupled to said main frame (3).

3. A stacking device (1) according to claim 2 **characterized in that** each one of said modular, posts (10) is assembled individually and is provided with independent means for moving said sliding means (9) and with elements for connection to an electric power supply line.

4. A stacking device (1) according to claim 1, **characterized in that** each one of said articulated brackets (19) is constituted by the mutually articulated coupling of a deactivation and resetting rocker (21) and of a supporting tooth (22), said rocker (21) being articulated so that it can rotate on a vertical plane about a fixed horizontal axis (23) which is rigidly coupled to the respective sliding block (18) and forms an end (21a) which cantilevers out towards the tooth (22) and is affected by an eyelet (24) for accommodating a pivot (25) which is also horizontal, is made of flexible material and provides mutual articulation with said supporting tooth (22), said tooth being affected by a slot (26) which is shaped like a circular arc and is formed in the portion that faces said post (10) for engagement with said fixed axis (23), the rotation of said rocker (21) causing the simultaneous movement of said pivot (25) alternately above or below a imaginary horizontal plane that passes through the center of said fixed axis (23) and the consequent positioning of said supporting tooth (22) in an active or retracted configuration.

5. A stacking device (1) according to claim 4, **characterized in that** said automatic actuation elements are constituted by two rollers (27) mounted, so that they can rotate freely, on each post (10) proximate to the upper and lower stroke limits of said sliding blocks (18), respectively, and adapted to make contact, at said upper stroke limit, with said rocker (21), causing its resetting rotation and the consequent arrangement of said tooth (22) in the active horizontally cantilevered configuration and, at said lower stroke limit, with said tooth (22), causing its deactivating rotation into a folded noninterference configuration.

## Patentansprüche

1. Stapelvorrichtung (1) für flache Produkte, insbesondere für keramische Fliesen (2), mit einem Hauptrahmen (3), der im oberen Bereich einen Förderer (4) mit parallelen engen Gurten zum Erfassen der Seiten der Produkte aufnimmt und entlang dessen eine Mehrzahl von darunter liegenden Stationen (5-8) zum Stapeln der Produkte vorgesehen ist, um Stapel zu bilden, nachdem die Produkte bilateral auf entsprechenden Mitteln (9) abgelegt wurden, die auf entsprechenden Paaren von Führungspfosten (10) gleiten, um sie auf einem weiteren darunter liegenden Förderer (11) abzulegen, um die Produkte zu einer Verpackungsstation (12) zu schicken, **dadurch gekennzeichnet, dass** die Pfosten (10) modular sind und lösbar an den Hauptrahmen (3) mittels entsprechender Mittel (13) angekoppelt werden können, und dass die gleitenden bilateralen Aufnahmemittel (9) bei jeder Station wenigstens aus einem Paar von Gleitblöcken (18) bestehen, die vertikal mit einer hin- und hergehenden stufenweisen Bewegung aktiviert werden können und auf den modularen Pfosten (10) geführt sind, wobei entsprechende gelenkige Träger (19) an den Gleitblöcken (18) angelenkt sind, wobei die Träger (19) automatisch mittels entsprechender Elemente (20) abwechselnd in eine gefaltete nicht eingreifende Konfiguration während des Aufsteigens in leerem Zustand oder in eine zugewandte aktive Konfiguration aktivierbar sind, die zum Stapeln horizontal auskragt.

2. Stapelvorrichtung (1) nach Anspruch 1, **dadurch gekennzeichnet, dass** die Mittel (13) zum Koppeln der Pfosten (10) an den Hauptrahmen (3) aus entsprechenden konturierten Flanschen (14) bestehen, die zum Eingriff herkömmlicher Schraubmittel vorperforiert sind, am oberen und unteren Ende der Pfosten (10) vorgesehen sind und mit entsprechenden komplementär geformten komplementären Flanschen (15) starr an den Hauptrahmen (3) gekoppelt werden können.

3. Stapelvorrichtung (1) nach Anspruch 2, **dadurch gekennzeichnet, dass** jeder der modularen Pfosten (10) einzeln zusammengebaut ist und mit unabhängigen Mitteln versehen ist, um die Gleitmittel (9) mit Elementen in Zusammenhang mit einer elektrischen Leistungsversorgungsleitung zu bewegen.

4. Stapelvorrichtung (1) nach Anspruch 1, **dadurch gekennzeichnet, dass** jeder der angelenkten Träger (19) aus der gemeinsam verschwenkbaren Kopplung einer Deaktivierungs- und Rücksetzungsschwinge (21) und eines Stützzahns (22) gebildet ist, wobei die Schwinge (21) derart geschwenkt werden kann, dass sie sich in einer vertikalen Ebene um eine feste horizontale Achse (23) dreht, die starr an den betreffenden Gleitblock (18) gekoppelt ist und ein Ende (21a) bildet, das zu dem Zahn (22) hervorragt und von einem Auge (24) beeinflusst wird, um einen Schwenkzapfen (25) aufzunehmen, der gleichfalls horizontal ist, aus einem flexiblen Material besteht und eine gemeinsame Verschwenkung mit dem Stützzahn (22) bereitstellt, wobei der Zahn von einem Schlitz (26) beeinflusst wird, der wie ein Kreisbogen geformt ist und in dem Bereich gebildet ist, der dem Pfosten (10) zum Eingriff mit der festen Achse (23) zugewandt ist, wobei die Drehung der Schwinge (21) die gleichzeitige Bewegung des Schwenkzapfens (25) abwechselnd nach oben oder nach unten in einer imaginären horizontalen Ebene verursacht, die über die Mittel der festen Achse (23) gelangt und nachfolgend auf den Stützzahn (22) in einer aktiven oder eingezogenen Konfiguration positioniert wird.

5. Stapelvorrichtung (1) nach Anspruch 4, **dadurch gekennzeichnet, dass** die automatischen Betätigungselemente aus zwei Rollen (27) gebildet sind, die so befestigt sind, dass sie sich auf jedem Pfosten (10) in der Nähe der oberen bzw. unteren Hubgrenzen der Gleitblöcke (18) frei drehen können, und die dazu ausgebildet sind, an der oberen Hubgrenze mit der Schwinge (21) in Kontakt zu gelangen, wodurch ihre Rückführrotation und die nachfolgende Anordnung des Zahns (22) in der aktiven horizontalen hervorstehenden Konfiguration verursacht wird, und an der unteren Hubgrenze mit dem Zahn (22) eine Deaktivierungsrotation in eine gefaltete nicht eingreifende Konfiguration verursacht wird.

## Revendications

1. Dispositif (1) pour empiler des objets plats, notamment des carreaux (2) en céramique, comprenant un bâti principal (3) qui supporte, dans la portion supérieure, un transporteur (4) avec des courroies parallèles étroites pour pincer les côtés des produits et le long duquel se trouvent une pluralité de postes sous-jacents (5-8) pour empiler les produits de manière à former des piles après que lesdits produits aient été posés bilatéralement sur des moyens correspondants (9) qui coulissent sur des paires correspondantes de poteaux de guidage (10) et pour les déposer sur un autre convoyeur sous-jacent (11) pour envoyer les produits vers un poste d'emballage (12), ***caractérisé en ce que*** lesdits poteaux (10) sont modulaires et peuvent être couplés de manière détachable audit bâti principal (3) grâce à des moyens correspondants (13), et ***en ce que*** lesdits moyens de support bilatéraux coulissants (9) sont constitués, pour chaque poste, d'au moins une paire de blocs coulissants (18) qui peuvent être actionnés verticalement selon un mouvement de va-et-vient pas-à-pas et sont guidés sur lesdits poteaux modulaires (10), des consoles articulées correspondantes (19) étant articulées sur lesdits blocs coulissants (18), lesdites consoles (19) étant commandables de manière automatique grâce à des éléments correspondants (20) alternativement dans une configuration repliée de non interférence pendant la montée à vide, ou dans une configuration active de vis-à-vis qui saille extérieurement et horizontalement en porte-à-faux pour l'empilement.

2. Dispositif (1) d'empilage selon la revendication 1, ***caractérisé en ce que*** lesdits moyens (13) pour coupler les poteaux (10) audit bâti principal (3) sont constitués par des brides profilées respectives (14) qui sont pré-perforées pour l'engagement de moyens de vis conventionnels, sont ménagées aux extrémités supérieure et inférieure des poteaux (10) et peuvent être couplées à des brides complémentaires (15) conformées complémentairement, couplées rigidement audit bâti principal (3).

3. Dispositif (1) d'empilage selon la revendication 2, ***caractérisé en ce que*** chacun desdits postes modulaires (10) est assemblé individuellement et est muni de moyens indépendants pour déplacer lesdits moyens coulissants (9) et d'éléments pour un raccordement avec une ligne l'alimentation en énergie électrique.

4. Dispositif (1) d'empilage selon la revendication 1, ***caractérisé en ce que*** chacune des consoles articulées (19) est constituée par le couplage mutuellement articulé d'un levier de désactivation et de réenclenchement (21) et d'une dent de support (22), ledit levier (21) étant articulé de manière à pouvoir tourner sur un plan vertical autour d'un axe horizontal fixe (23) qui est couplé rigidement au bloc coulissant respectif (18) et forme une extrémité (21a) qui saille en direction de la dent (22) et est influencée par un oeillet (24) pour recevoir un pivot (25) qui est également horizontal, est fait d'un matériau flexible et fournit une articulation mutuelle avec ladite dent de support (22), ladite dent étant affectée par une fente (26) qui est conformée en arc de cercle et est formée dans la portion qui fait face au poteau (10) pour un engagement avec ledit axe fixe (23), la rotation dudit levier (21) provoquant le mouvement simultané dudit pivot (25) alternativement au-dessus ou au-dessous d'un plan horizontal imaginaire qui passe par le centre dudit axe fixe (23), et le positionnement résultant de ladite dent de support (22) dans une configuration active ou rétractée.

5. Dispositif (1) d'empilage selon la revendication 4, ***caractérisé en ce que*** lesdits éléments de commande automatique sont constitués de deux galets (27) montés, de manière à pouvoir tourner librement, sur chaque poteau (10) à proximité respectivement des limites supérieure et inférieure de course desdits blocs coulissants (18), et adaptés pour faire contact, à ladite limite supérieure de course, avec ledit levier (21), provoquant sa rotation de réenclenchement et l'ordonnancement de ladite dent (22) dans la configuration active horizontalement en porte-à-faux et, à ladite limite inférieure, avec ladite dent (22), provoquant sa rotation de désactivation dans une configuration repliée de non interférence.
